# EUROPEAN PATENT SPECIFICATION

(11) **EP 0 435 831 B1**
(45) Date of publication and mention of the grant of the patent: **24.08.1994**
(21) Application number: 90830499.1
(22) Date of filing: 30.10.1990
(51) Int. Cl.: B60S 1/24

(54) **A device for operating a motor-vehicle windscreen-wiper arm**
Vorrichtung zur Betätigung eines Kraftfahrzeugscheibenwischerarmes
Dispositif pour faire fonctionner un bras d'essuie-glace de véhicule à moteur

(30) Priority: 07.11.1989 IT 6796589
(43) Date of publication of application: 03.07.1991
(73) Proprietor: INDUSTRIE MAGNETI MARELLI S.p.A., 20145 Milano (IT)
(72) Inventor: Pedani, Giuseppe, I-20131 Milano (IT)
(74) Representative: Quinterno, Giuseppe

(56) References cited:
- DE-A- 2 143 271
- GB-A- 2 141 021
- GB-A- 2 219 491

## Description

The present invention relates to a device for operating a windscreen-wiper arm, of the type comprising:
- a crank which can be rotated in opposite senses and carries a cylindrical pin,
- a ball mounted eccentrically and rotatably on the cylindrical pin,
- a cap member carried by a connecting rod and rotatable on the ball,
- a coupling peg slidable axially through the ball between two opposite engagement positions, in the first of which - corresponding to the rotation of the crank in a first sense - it engages a seat with an inclined profile formed in the crank and makes the ball fast for rotation with the crank and in the second of which - corresponding to the rotation of the crank in a second sense opposite the first - it engages a cavity in the cap member, and
- cam means between the ball and the crank for switching the peg between its first and second engagement positions when the rotation of the crank is reversed from the first sense of rotation to the second.

A device of the type specified above is described in the same Applicant's Italian patent application IT-A-8867553 corresponding to GB-A-2 219 491 published on 13.12.89 and therefore not being part of the state of the art as defined in Art. 54(2) EPC in conjunction with Art. 89 EPC.

The operating sequence of the aforesaid device is as follows.

During normal operation, the crank is rotated in the first sense, for example anticlockwise. The peg engages the cavity in the cap and makes the connecting rod fast for rotation with the ball. The latter rotates on the cylindrical pin and is entrained for rotation by the crank. When the windscreen-wiper is switched off, a control unit reverses the sense of rotation of the electric motor which drives the crank when the crank reaches its end of travel position, so that it rotates through 360° in the second sense (clockwise) before stopping. During this rotation, the peg engages the seat in the crank and makes the ball fast with the crank; the ball thus reverses its eccentricity relative to the normal operating configuration and enables the windscreen-wiper arm connected to the connecting rod to perform an additional angular stroke which brings the blade to a lowered rest position.

When the windscreen-wiper is switched on again, the control unit supplies the electric motor so that it rotates through 180° in the second sense of rotation (clockwise). During this rotation, the peg re-engages the cavity in the cap member, as is necessary for the normal operation of the windscreen-wiper. The control unit then reverses the sense of rotation of the motor, returning the crank to its normal sense of rotation.

The aforesaid rotation through 180° in the clockwise sense when the windscreen-wiper is switched on makes the control unit more complicated.

The object of the present invention is to provide an operating device of the type specified at the beginning of the present description which does not need to rotate in the second sense of rotation when the windscreen-wiper is switched on.

According to the present invention, this object is achieved by the provision of an operating device of the type defined above, characterised in that the cap member has a projection which cooperates with a groove formed in the ball and which is adapted to abut an end of the groove when the crank rotates in the second sense so that the ball applies to the peg a lateral force which causes the peg to come out of the seat in the crank as a result of its reaction against the inclined profile of the seat, and in that the cavity in the cap member is recessed with respect to a reaction surface against which an end of the peg presses as a result of the force due to friction between the ball and the cap member.

The present invention will now be described with reference to the appended drawings, provided purely by way of non-limiting example, in which:
Figure 1 is an exploded perspective view of the device according to the present invention, and
Figures 2, 3 and 4 are sections taken on the line II-II of Figure 1 in various operating conditions.

With reference to the drawings, a device for operating a windscreen-wiper arm is indicated 1 and includes a crank 2 fixed to the drive shaft of a reversible electric motor (not shown). A cylindrical pin 4 is fixed to the crank 2 and a ball 6 is mounted rotatably and eccentrically thereon. A cam disc 8, which is also mounted eccentrically on the cylindrical pin 4 and has a peripheral notch 10, is interposed in known manner between the ball 6 and the crank 2. In known manner, the cam disc 8 has a tooth 12 which engages an arcuate groove 14 in the ball 6.

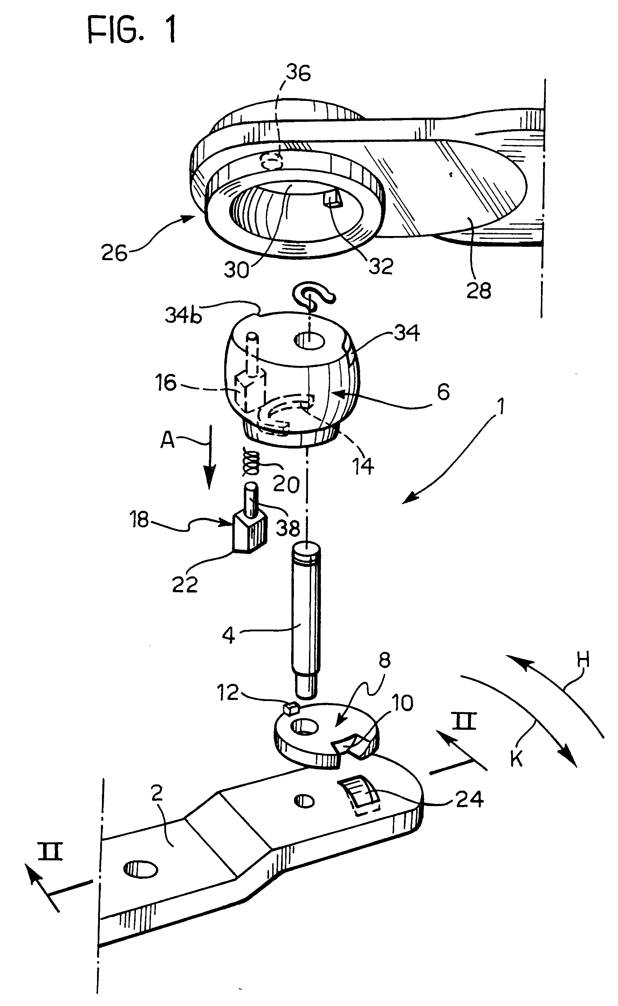

An axial aperture 16 is formed in the ball 6 and a peg 18 slidable therein is urged by a helical spring 20 in the direction indicated by the arrow A in Figure 1. The peg 18 has a lower, wedge-shaped portion 22 for cooperating with a seat 24 with an inclined profile formed in the crank 2.

A cap member 26 carried by a connecting rod 28 to which the windscreen-wiper arm (not shown) is fixed is rotatable on the ball 6. The cap member 26 has a reaction surface 30 with a projection 32 which cooperates with a groove 34 in the ball 6. A cavity 36 engageable by an end 38 of the peg 18 is also formed in the reaction surface 30 and is recessed therein.

When the windscreen-wiper is operating normally, the device described above behaves in exactly the same way as that described in the Italian patent application IT-A-67553 cited above.

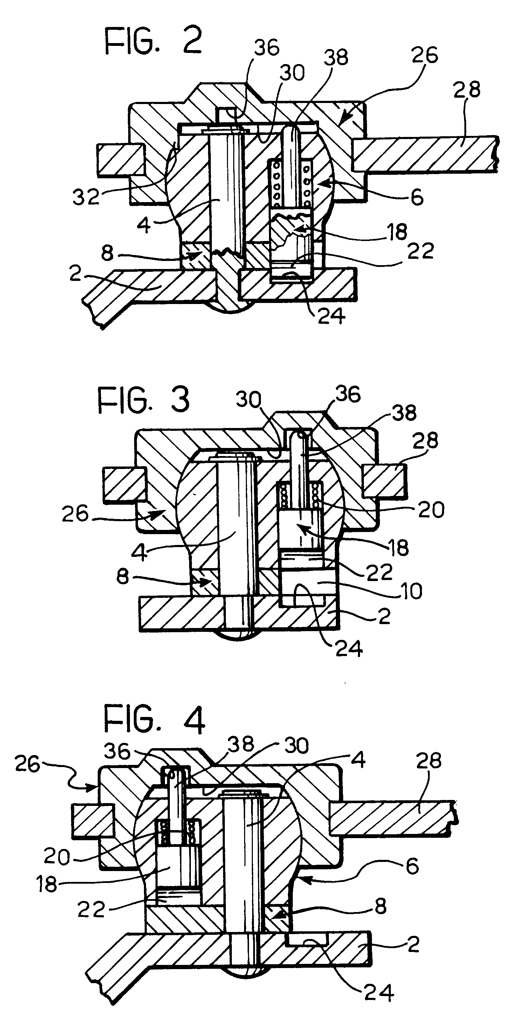

In the normal operating configuration shown in Figure 4, the peg 18 is restrained with its end 38 engaged in the cavity 36 in the cap member 26, since the notch 10 in the cam disc 8 is offset from the position of the peg 18 and the end 22 of the latter bears against the surface of the cam disc 8. The tooth 12 of the disc 10 reacts frontally against an end of the groove 14 so that, during the rotation of the crank 2, the cam disc 8 is fast for rotation with the ball 6 and its angular position relative to the peg 18 does not, therefore, change. Thus, in normal operation, during which the crank 2 rotates in the sense indicated by the arrow K in Figure 1, the cap member 26 and the ball 6 are fast for rotation and the ball 6 rotates on the cylindrical pin 4.

When the windscreen-wiper is switched off, a control unit, not shown, reverses the sense of rotation of the electric motor, in known manner, so that the crank 2 performs one complete turn in the sense indicated by the arrow H in Figure 1 before stopping. As described in detail in the aforementioned Italian patent application IT-A-67553, during this rotation in the sense indicated by the arrow H, the cam disc 8 is no longer entrained by the tooth 12 and remains stationary as a result of friction with the surface of the crank 2. The notch 10 in the disc 8 is positioned in correspondence with the seat 24 in the crank 2. The ball 6 rotates until the peg 18 is in correspondence with the notch 10 in the disc 8. The peg is urged into engagement with the seat 24 by the spring 20 so that its end 22 makes the ball 6 fast for rotation with the crank 2. During this reverse rotation, the eccentricity of the ball 6 is reversed with respect to the normal operating configuration, increasing its throw and enabling the connecting rod 28 and the windscreen-wiper arm to perform an additional angular stroke which brings the arm to a lowered rest position outside the driver's field of view.

When the device according to the present invention is switched on again, the crank 2 is immediately rotated in the sense of normal operation indicated by the arrow K without a preliminary rotation in the reverse sense indicated by the arrow H.

At first, the ball 6 rotates with the crank 2 as long as the peg 18 remains engaged in the seat 24 of the crank 2. The projection 32 of the cap member 26 abuts the end 34b of the groove 34 as a result of the rotation of the ball 6 relative to the cap member 26 of the connecting rod 28. At the same time, the cavity 36 is positioned in correspondence with the axis of the peg 18; the peg 18 is no longer forced to engage the seat 24 by the reaction surface 30 of the cap member 26. The peg 18 is acted on laterally by the ball 6 which in turn is entrained by the projection 32 in abutment with the end 34b of the groove 34. The peg 18 is moved axially as a result of the reaction between the peg 18 and the inclined seat 24 and engages the cavity 36, enabling the ball 6 to rotate freely relative to the crank 2.

At this point, the device 1 is in the configuration shown in Figure 3, with the cap member 26 made fast with the ball 6 by means of the peg 18 and by means of the projection 32 which bears against the end 34b. After the peg 18 has engaged the seat 36, the cam disc 8 rotates relative to the ball 6, into its normal operating position.

## Claims

1. A device for operating a windscreen-wiper arm, comprising:
- a crank (2) which can be rotated in opposite senses and carries a cylindrical pin (4),
- a ball (6) mounted eccentrically and rotatably on the cylindrical pin (4),
- a cap member (26) carried by a connecting rod (28) and rotatable on the ball (6),
- a coupling peg (18) slidable axially through the ball (6) between two opposite engagement positions, in the first of which - corresponding to the rotation of the crank in a first sense (H) - it engages a seat (24) with an inclined profile formed in the crank (2) and makes the ball (6) fast for rotation with the crank (2) and in the second of which - corresponding to the rotation of the crank (2) in a second sense (K) opposite the first - it engages a cavity (36) in the cap member (26), and
- cam means (8) between the ball (6) and the crank (2) for switching the peg (18) between its first and second engagement positions when the rotation of the crank (2) is reversed from the first sense of rotation to the second,
characterised in that the cap member (26) has a projection (32) which cooperates with a groove (34) formed in the ball (6) and which is adapted to abut an end (34b) of the groove (34) when the crank (2) rotates in the second sense (K) so that the ball (6) applies to the peg (18) a lateral force which causes the peg (18) to come out of the seat (24) in the crank (2) as a result of its reaction against the inclined profile of the seat (24), and in that the cavity (36) in the cap member (26) is recessed with respect to a reaction surface (30) against which an end of the peg (18) presses as a result of the force due to friction between the ball (6) and the cap member (26).

## Patentansprüche

1. Vorrichtung zur Betätigung eines Scheibenwischerarmes, mit:
- einer Kurbel (2), die in entgegengesetzte Richtungen drehbar ist und einen zylindrischen Stift (4) trägt,
- einer Kugel (6), die exzentrisch und drehbar auf dem zylindrischen Stift (4) gelagert ist,
- einem Aufsatzteil (26), das von einem Pleuel (28) getragen wird und drehbar auf der Kugel (6) gelagert ist,
- einem Koppelstift (18), der axial durch die Kugel (6) hindurch zwischen zwei entgegengesetzten Einraststellungen hin- und herverschiebbar ist, wobei er in der ersten dieser Stellungen - entsprechend der Drehung der Kurbel in einer ersten Richtung (H) - in einem in der Kurbel (2) ausgebildeten Sitz (24) mit einem abgeschrägten Profil einrastet und die Kugel (6) zur Drehung mit der Kurbel (2) arretiert, und er in der zweiten Stellung - entsprechend der Drehung der Kurbel (2) in einer zweiten Richtung (K), die entgegengesetzt zur ersten ist - in einer Vertiefung (36) im Aufsatzteil (26) einrastet, und
- einer zwischen der Kugel (6) und der Kurbel (2) vorgesehene Nockenvorrichtung (8) zum Hin- und Herbewegen des Stiftes (18) zwischen seiner ersten und seiner zweiten Einraststellung bei Umkehr der Drehung der Kurbel (2) von der ersten Drehrichtung in die zweite,
dadurch gekennzeichnet, daß das Aufsatzteil (26) einen Vorsprung (32) aufweist, der mit einer in der Kugel (6) ausgebildeten Nut (34) zusammenwirkt und der bei Drehung der Kurbel (2) in der zweiten Richtung (K) an ein Ende (34b) der Nut (34) stößt, so daß die Kugel (6) eine seitliche Kraft auf den Stift (18) ausübt, wodurch der Stift (18) als Ergebnis seines Druckes gegen das abgeschrägte Profil des Sitzes (24) aus seinem Sitz (24) in der Kurbel (2) herausgedrückt wird, und daß die Vertiefung (36) im Aufsatzteil (26) bezüglich einer Druckfläche (30) versenkt ist, gegen die ein Ende des Stiftes (18) als Ergebnis der durch Reibung zwischen der Kugel (6) und dem Aufsatzteil (26) entstehenden Kraft drückt.

## Revendications

1. Dispositif pour commander un bras d'essuie-glace, comprenant :
- une manivelle (2) qui peut être entraînée en rotation en sens opposés et qui porte un maneton cylindrique (4),
- une rotule (6) montée tournante et excentrique sur le maneton cylindrique (4),
- un élément coiffe (26) porté par une bielle de liaison (28) et pivotante sur la rotule (6),
- une fiche d'accouplement (18) coulissante dans le sens axial au travers de la rotule (6) entre deux positions opposées d'engagement, dans la première desquelles - correspondant à la rotation de la manivelle dans un premier sens (H) - elle s'engage dans un siège (24) avec un profil incliné formé dans la manivelle (2) et rend la rotule (6) solidaire en rotation de la manivelle (2), et dans la seconde desquelles - correspondant à la rotation de la manivelle (2) dans un second sens (K) opposé au premier - elle s'engage dans une cavité (36) dans l'élément coiffe (26), et
- un moyen formant came (8) entre la rotule (6) et la manivelle (2) pour faire basculer la fiche (18) entre sa première et sa seconde positions d'engagement quand la rotation de la manivelle (2) est inversée du premier sens de rotation au second.
caractérisé en ce que l'élément coiffe (26) possède une saillie (32) qui coopère avec une gorge (34) formée dans la rotule (6) et qui est conçue pour buter contre une extrémité (34b) de la gorge (34) quand la manivelle (2) tourne dans le second sens (K) de sorte que la rotule (6) applique à la fiche (18) une force latérale qui provoque la sortie de la fiche (18) du siège (24) dans la manivelle (2) suite à sa réaction contre le profil incliné du siège (24), et en ce que la cavité (36) dans l'élément coiffe (26) est en retrait par rapport à une surface de réaction d'appui (30) contre laquelle une extrémité de la fiche (18) appuie comme conséquence de la force due au frottement entre la rotule (6) et l'élément coiffe (26).
